(19) Europäisches Patentamt
European Patent Office
Office européen des brevets

(11) **EP 3 093 104 A2**

(12) **EUROPÄISCHE PATENTANMELDUNG**

(43) Veröffentlichungstag:
**16.11.2016 Patentblatt 2016/46**

(51) Int Cl.:
***B23Q 3/155*** *(2006.01)* ***B23Q 3/157*** *(2006.01)*

(21) Anmeldenummer: **16168976.5**

(22) Anmeldetag: **10.05.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **11.05.2015 DE 102015208642**

(71) Anmelder: **Schiess Tech GmbH**
**10785 Berlin (DE)**

(72) Erfinder:
• **Vogel, Heinz**
**72644 Oberboihingen (DE)**
• **Liu, Zhixu**
**73779 Deizisau (DE)**

(74) Vertreter: **DREISS Patentanwälte PartG mbB**
**Friedrichstrasse 6**
**70174 Stuttgart (DE)**

(54) **MAGAZIN FÜR WERKZEUGE**

(57) Magazin für Werkzeuge umfassend eine in sich geschlossene Laufbahn (13), mehrere Köcher (23) für Werkzeuge, eine Übergabeeinrichtung (15) und eine Antriebseinrichtung für die Köcher (23), wobei die Köcher (23) entlang der Laufbahn (15) geführt werden und wobei die Übergabeeinrichtung (15) so ausgebildet ist, dass sie an einer Übergabestelle (26) einen der Köcher (23) aus der Laufbahn (13) auskoppeln kann, **dadurch gekennzeichnet,** dass jeder Köcher (23) ein Führungselement (31) und ein Antriebselement (33) aufweist, und dass die Antriebseinrichtung formschlüssig mit den Antriebselementen (33) von zwei Köchern (23.1, 23.2), die sich beidseits der Übergabeeinrichtung (15) befinden, in Eingriff ist.

Fig. 15

EP 3 093 104 A2

**Beschreibung**

Die Erfindung betrifft ein Magazin für Werkzeuge, das an der Peripherie von Bearbeitungssystemen, wie Drehzentren, Fräszentren, Bearbeitungszentren, Schleifzentren und Erodiermaschinen angeordnet werden kann. In dem Magazin werden die in dem Bearbeitungssystem benötigten Werkzeuge zwischenlagert und bei Bedarf an eine Werkzeugwechseleinrichtung übergeben, die das Werkzeug an das Bearbeitungszentrum übergibt. Dieser Vorgang läuft natürlich auch in umgekehrter Richtung ab.

Die Schnittstellen zwischen Werkzeugen und Bearbeitungszentrum sind sehr weitgehend standardisiert. Bekannte Schnittstellen aus dem Bereich der Werkzeugmaschinen sind - ohne Anspruch auf Vollständigkeit - die klassische VDI-Schnittstelle, das System der Morsegekel (MK), das Capto-System, der Steilkegel, das HSK-System und die HSK-T-Schnittstelle. Allen diesen Schnittstellen ist gemeinsam, dass die Werkzeugspindel der Bearbeitungsmaschine eine bestimmte Geometrie aufweist und das Werkzeug ein komplementäres Gegenstück aufweist.

Bei vielen Magazinen ist der Magazinplatz komplementär zu dem Werkzeug ausgebildet. Der Magazinplatz ist gewissermaßen eine vereinfachte Kopie der Werkzeugspindel des Bearbeitungssystems. Vereinfacht deshalb, weil der Magazinplatz keine Drehmomente übertragen muss und die Genauigkeitsanforderungen sehr viel niedriger sind.

In der Literatur sind verschiedene Magazine für Werkzeuge bekannt. In der DE 2143383 wird ein Magazin für Werkzeuge beschrieben, umfassend eine in sich geschlossene Laufbahn, mehrere Köcher für Werkzeuge, eine Übergabeeinrichtung und eine Antriebseinrichtung für die Köcher auf, wobei die Köcher entlang der Laufbahn geführt werden und die Übergabeeinrichtung so ausgebildet ist, dass sie an einer Übergabestelle einen der Köcher aus der Laufbahn auskoppeln kann. Der Antrieb der Köcher erfolgt über ein Zahnrad, das mit Bolzen, die an den Köchern angeordnet sind, kämmt. Das Zahnrad kämmt immer mit dem Köcher, der sich in der Übergabestation befindet. Wenn also dieser Köcher aus der Laufbahn im Bereich der Übergabestation ausgekoppelt wird, dann sind die anderen Köcher, die sich in der Laufbahn befinden, nicht positioniert. Es kann zu einem Verrutschen der Köcher kommen.

So gibt es beispielsweise Magazine, die eine scheibenförmige Grundgeometrie haben. Am Außendurchmesser dieser Scheibe sind die Lagerplätze für die Werkzeuge angeordnet. Des Weiteren gibt es sogenannte Stangenmagazine, bei denen die Lagerplätze für die Werkzeuge linear hintereinander angeordnet sind.

Darüber hinaus gibt es auch sogenannte Kettenmagazine. Bei diesen Kettenmagazinen ist an jedem Kettenglied ein Lagerplatz, nachfolgend auch als Köcher bezeichnet, für ein Werkzeug angeordnet. Ein Beispiel für ein Kettenmagazin ist aus der DE 196 09 145 A1 bekannt, wobei die Kette als Zahnriemen ausgebildet ist.

Nachteilig an den Kettenmagazinen ist, dass die Köcher der Werkzeuge über die Kette miteinander verbunden sind. Dies bedeutet, dass sich erstens die Ungenauigkeiten der Kettenglieder im schlechtesten Fall addieren und somit die Positioniergenauigkeit eines einzelnen Köchers an einer Übergabestelle zwischen Magazin und Werkzeugwechseleinrichtung relativ schlecht ist. Außerdem bewirkt die Kopplung der Köcher durch die Glieder des Kettenmagazins eine Einschränkung der Bewegungsfreiheit der Köcher. Benachbarte Köcher können relativ zueinander nur geschwenkt oder gedreht werden, wobei der Bolzen, welcher die benachbarten Kettenglieder verbindet, den Drehpunkt bildet.

Ein weiterer Nachteil von Kettenmagazinen ist, dass sich die Kette bei vertikaler Anordnung und einseitiger Magazinbeladung stark dehnt. In Folge dessen ist die Position des Köchers am Übergabeplatz je nach Gewichtsverteilung nicht eindeutig. Das führt zu Störungen bei der Einlagerung und dem Entnehmen von Werkzeugen.

Nachteil des Kettenmagazins ist auch, dass die Köcher in denen die Werkzeuge aufbewahrt werden nicht einzeln herausgelöst werden können. Um dies zu ermöglichen werden zusätzliche Trenn-/Schnittstellen benötigt, was zusätzliche Kosten verursacht.

Der Erfindung liegt die Aufgabe zugrunde, ein Magazin für Werkzeuge bereitzustellen, das sehr einfach im Aufbau ist, flexibel an verschiedenste Einsatzbedingungen anpassbar ist und außerdem die Übergabe von einem Werkzeug aus dem Magazin an eine Werkzeugwechseleinrichtung oder dergleichen sehr einfach ermöglicht.

Diese Aufgabe wird erfindungsgemäß gelöst durch ein Magazin für Werkzeuge nach dem Oberbegriff des Anspruchs 1 mit den Merkmalen des Kennzeichenteils. Eine in sich geschlossene Laufbahn kann beispielsweise eine kreisförmige, eine ovale oder auch andersartig aus Bogensegmenten und geraden Stücken zusammengesetzte geschlossene Bahn sein.

Die geschlossene Bahn des erfindungsgemäßen Magazins stellt eine gewisse Ähnlichkeit zu einem Kettenmagazin dar. Allerdings sind die Köcher des erfindungsgemäßen Magazins nicht wie bei einem Kettenmagazin über die Bolzen der Kettenglieder miteinander verbunden. Vielmehr werden die Köcher entlang der Laufbahn hintereinander aufgereiht und berühren sich an ihren Stirnseiten.

Dies erlaubt es, z.B. an der Übergabestelle des erfindungsgemäßen Magazins einen einzelnen Köcher aus der Laufbahn auszukoppeln, indem der Köcher orthogonal zu der Längsachse der Laufbahn im Bereich der Übergangsstelle relativ zu der Laufbahn verschoben wird. Dadurch muss ein mit dem Magazin zusammenwirkende Werkzeugwechsler nur eine lineare Bewegung in einer Richtung ausführen. Er ist daher einfach in der Herstellung, benötigt wenig Bauraum und ist steuerungstechnisch einfach zu beherrschen.

Der Vorteil der erfindungsgemäßen Laufbahn, welche die Köcher auf einer geschlossenen Bahn führt, gegenüber einer Kette ist darin zu sehen, dass die Köcher bzw. die zugehörigen Führungselemente durch die Laufbahn geführt werden und die benachbarten Führungselemente mit wenig oder keinem Spiel hintereinander angeordnet sind. Dadurch ist es ausreichend, ein oder zwei Köcher anzutreiben, um alle auf der Laufbahn befindlichen Köcher anzutreiben. Der oder die angetriebenen Köcher schieben die in Bewegungsrichtung vor ihnen auf der Laufbahn befindlichen Köcher an. Diese Art der Kraftübertragung ist sehr einfach und zuverlässig. Auch bei einer Umkehr der Bewegungsrichtung funktioniert dieses Prinzip.

Weil die verschiedenen Köcher nur über die Laufbahn miteinander gekoppelt sind, ist dieses System nicht nur sehr viel einfacher als eine vergleichbare Kette, sondern hat darüber hinaus auch noch einen zusätzlichen Freiheitsgrad.

Dieser Freiheitsgrad wird bei dem erfindungsgemäßen Magazin beim Entnehmen eines Werkzeugs an der Übergabestelle bzw. dem Einlagern eines Werkzeugs in einen Köcher ausgenutzt.

Ein weiterer Vorteil des erfindungsgemäßen Magazins ist darin zu sehen, dass es beliebig im Raum angeordnet werden kann. Es kann, wie in dem Ausführungsbeispiel dargestellt waagerecht angeordnet sein. Es kann aber auch vertikal nach oben, seitlich liegend oder schräg ausgerichtet werden, ohne Beeinträchtigung der Funktionalität. Dadurch kann das Magazin flexibel an verschiedene Maschinen adaptiert werden.

Eine vorteilhafte Ausgestaltung des erfindungsgemäßen Magazins sieht vor, dass jeder Köcher ein Führungselement und ein Antriebselement umfasst. Dabei ist es häufig so, dass das Führungselement und das Antriebselement als integrierte Bauteile hergestellt werden und mit dem eigentlichen Köcher verschraubt sind. Dann ist es nämlich ohne weiteres möglich, durch Auswechseln der Köcher das Magazin für andere standardisierte Werkzeuge einsatzbereit zu machen.

So kann beispielsweise durch Austausch der Köcher ein Magazin, das für Werkzeuge mit Steilkegel eingerichtet ist, so ertüchtigt werden, dass Werkzeuge mit einer Capto-Schnittstelle oder einem VDI-Schaft einsetzbar sind.

In weiterer vorteilhafter Ausgestaltung ist vorgesehen, dass die Antriebselemente der Köcher als Zahnstangensegmente ausgebildet sind. Dann kann der Antrieb eines oder mehrerer Köcher auf einfache Weise über ein oder zwei Ritzel erfolgen, die mit den Zahnstangensegmenten der angetriebenen Köcher kämmen.

Um die Führung und die lagerichtige Positionierung der Köcher zu gewährleisten, ist es vorteilhaft, wenn die Führungselemente formschlüssig in der Laufbahn aufgenommen sind.

Es hat sich dabei als vorteilhaft erwiesen, wenn die Laufbahn zwei voneinander beabstandete und parallel zueinander verlaufende (Führungs-)Rippen aufweist. Dadurch ist es möglich, das Führungselement sehr einfach zu gestalten. Es kann beispielsweis als Block mit rechteckigem Querschnitt ausgebildet sein und zwei Nuten aufweisen in die die Rippen der Laufbahn formschlüssig eingreifen.

Eine solche Führung benötigt keine Wälzlager. Durch gleitfähige Kontaktflächen zwischen Laufbahn und Führungselement sowie eine geeignete Materialpaarung kann eine lange Lebensdauer bei ausreichend genauer Führung erreicht werden. Eine vorteilhafte Materialpaarung ist zum Beispiel eine Laufbahn aus Grauguss und Führungselemente aus gehärtetem Stahl. Denkbar ist auch das Führungselement aus (glasfaserverstärktem) Kunststoff herzustellen. Dieses Führungselement kann durch Spritzgießen sehr genau und kostengünstig hergestellt werden. Wenn ein Führungselement verschleißt, dann kann es sehr einfach ausgewechselt werden.

Im Gegensatz zu anderen Lösungen muss der Köcher, der die Werkzeuge aufnimmt, nicht gehärtet sein, da er am Gleitprozess nicht beteiligt ist. Er kann ebenfalls aus Kunststoff oder zum Beispiel aus Aluminium hergestellt werden.

Der Werkzeugköcher muss nicht seitlich außen auf dem Zahnsegment sitzen. Er kann auch unter oder über dem Zahnsegment sitzen. Diese Anordnung verringert die zum Antrieb erforderlichen Kräfte, weil die Köcher mit den Werkzeugen bei der Kurvenfahrt nicht oder nur in geringem Maße beschleunigt werden müssen.

In erfindungsgemäßer Ausgestaltung des Magazins ist vorgesehen, dass die Übergabeeinrichtung einen Aktuator, bevorzugt eine Linearaktuator, umfasst, und dass eine Bewegungsrichtung des Aktuators und eine Bewegungsrichtung der Laufbahn an der Übergabestelle nicht parallel, sondern bevorzugt in einem Winkel verlaufen. Besonders bevorzugt ist es, wenn die Bewegungsrichtung des Aktuators und die Bewegungsrichtung der Laufbahn an der Übergabestelle einen Winkel von 90° einschließen. Es ist alternativ auch möglich, die Werkzeuge in einer Richtung zu entnehmen, die in der Ebene der Laufbahn liegt. Bei dem in den Figuren dargestellten Ausführungsbeispiel wäre die Entnahmerichtung dann waagerecht und nicht - wie dargestellt und detailliert beschrieben - vertikal.

Das Entladen eines Werkzeugs aus einem Köcher, der sich in der Laufbahn befindet, oder das Einlagern eine Werkzeugs in einen leeren Köcher kann dann durch die Übergabeeinrichtung auf einfache Weise erfolgen, indem der betreffende Köcher orthogonal zur Bewegungsrichtung der Laufbahn aus der Laufbahn in Richtung eines Werkzeugwechslers bewegt wird. Dort nimmt der Werkzeugwechsler das Werkzeug auf und der Köcher kann durch die Übergabeeinrichtung wieder zurück in die Laufbahn gebracht werden.

Der umgekehrte Vorgang findet statt, wenn aus einem Werkzeugwechsler ein Werkzeug in das erfindungsgemäße Magazin eingelagert werden soll. Dann fährt der leere Köcher angetrieben durch den Aktuator der Übergabeeinrichtung auf den Werkzeugwechsler zu und nimmt dabei das auf dem Werkzeugwechsler vorhandene Werkzeug in den Köcher auf.

Damit ein Werkzeug nicht aus dem Köcher herausfallen kann, ist es mechanisch gegen Herausfallen gesichert. Diese Sicherung kann entriegelt werden, indem ein Stift oder dergleichen von der Übergabeeinrichtung in den Köcher einfährt und dadurch die Entriegelung des Werkzeugs bewirkt.

Es hat sich weiter als vorteilhaft herausgestellt, wenn an der Übergabestelle ein Segment der Laufbahn bzw. der parallel zueinander verlaufenden Rippen mit dem Aktuator der Übergabeeinrichtung verbunden ist. Dann nämlich ist es ohne weiteres möglich, den in diesem Segment befindlichen Köcher mitsamt dem Laufbahnsegment senkrecht zu der Bewegungsrichtung der Laufbahn aus dieser herauszubewegen und dadurch die Übergabe zwischen Köcher und Magazin zu bewerkstelligen.

Außerdem ist es dadurch auf einfache Weise möglich, die Laufbahn mit verschiedenen Köchern zu bestücken. Wenn nämlich das Segment aus der Laufbahn herausbewegt ist, dann können an dieser Lücke der Laufbahn die Führungselemente der Köcher in die Laufbahn eingeführt werden. Dadurch ist auch ein sehr einfaches Auswechseln der Köcher einer Laufbahn möglich.

In erfindungsgemäßer Weise ist es vorgesehen, zwei der Vielzahl von Köchern, die sich in der Laufbahn befinden, anzutreiben. Zu diesem Zweck ist eine Antriebseinrichtung ausgebildet, die formschlüssig mit den Antriebselementen von mindestens zwei Köchern in Eingriff ist, die sich bevorzugt beidseits der Übereingabestelle befinden. Diese zwei Köcher, die sich rechts und links der Übergabeeinrichtung befinden, werden durch die Antriebseinrichtung in ihrer Position genau fixiert. Infolgedessen ist auch der Köcher, der sich zwischen diesen beiden Köchern in der Übergabeeinrichtung befindet, ebenfalls exakt positioniert. In dieser mit großer Genauigkeit ansteuerbaren Position ist es nun möglich, den Köcher mit dem an der Übergabeeinrichtung befestigten Segment der Laufbahn senkrecht zum ortsfesten Teil der Laufbahn aus dieser herauszubewegen und damit den bereits beschriebenen Werkzeugwechsel vorzunehmen.

Weil der Köcher, der sich in dem ausrückbaren Segment der Laufbahn befindet, nur über die T-nutenartige Führung mit dem Segment der Laufbahn verbunden ist und daher keine weiteren Anschläge oder sonstige Mittel zur Indizierung der Position benötigt, ist das Herausbewegen des Segments aus der Laufbahn sehr einfach möglich. Das Gewicht des Köchers und die zwischen Köcher und Laufbahn wirkenden Momente, die durch die Gewichtskraft des Köchers und des Werkzeugs verursacht werden, führen dazu, dass sich die Führungselemente beim Werkzeugwechsel nicht relativ zu dem Segment und zur Übergabeeinrichtung verschieben. Daher ist auch keine Brems- oder Arretiereinrichtung erforderlich. Auch dies führt zu einer sehr einfachen und trotzdem zuverlässigen Konstruktion. Es ist aber auch möglich den Köcher zum Beispiel durch einen federbelasteten Stift zu arretieren, der mit einer entsprechenden Vertiefung zusammenwirkt. Zum Beispiel kann die Verzahnung eines Antriebselements zur Arretierung genutzt werden.

Eine besonders vorteilhafte Ausgestaltung der Antriebsvorrichtung sieht vor, dass sie einen Motor, zwei koaxial zueinander angeordnete und verdrehsicher miteinander gekoppelte Zahnräder aufweist, wobei jedes der Zahnräder ein Ritzel antreibt. Jedes dieser Ritzel wiederum kämmt mit einem Antriebselement der Köcher, die sich rechts und links/beidseitig der Übergabeeinrichtung in der Laufbahn befinden.

Die beiden Zahnräder sind zwar starr miteinander gekoppelt. Es ist jedoch vorgesehen, dass zur Justierung die Zahnräder relativ zueinander geringfügig verdreht werden können, so dass dadurch auch die beiden Köcher, die sich beidseits der Übergabeeinrichtung befinden, etwas relativ zueinander bewegen. Dadurch ist es möglich, das Spiel zwischen dem Köcher, der sich in der Übergabeeinrichtung befindet und den beiden von den Ritzeln in Position gehaltenen Köchern zu minimieren. Dadurch wird die Positioniergenauigkeit des Köchers in der Übergabeeinrichtung nochmals verbessert.

Um unter allen Umständen und in allen Situationen sicherzustellen, dass mindestens ein Köcher von einem der Ritzel angetrieben werden kann, ist vorgesehen, dass die mit den Antriebselementen kämmenden Zähne der Ritzel um eine halbe Zahnteilung versetzt sind.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen offenbarten Merkmale können sowohl einzeln als auch in beliebiger Kombination miteinander erfindungswesentlich sein.

Zeichnung

Figuren 1 bis 4: Verschiedene Ansichten des erfindungsgemäßen Magazins, eines Werkzeugwechslers und eines Bearbeitungssystems,

Figuren 5 bis 9: Die Übergabe eines Werkzeugs vom Werkzeugwechsel in einen Köcher des erfindungsgemäßen Magazins,

Figuren 10 bis 13: Die Übergabe eines Werkzeugs aus einem Köcher auf den Werkzeugwechsler,

Figur 14: Einen mit dem erfindungsgemäßen Magazin zusammenwirkenden Werkzeugwechsler mit eingesetztem Werkzeug und

Figuren 15 bis 18: Das erfindungsgemäße Magazin teilweise freigeschnitten zur Erläuterung der erfindungsgemäßen Antriebseinrichtung.

Beschreibung der Ausführungsbeispiele

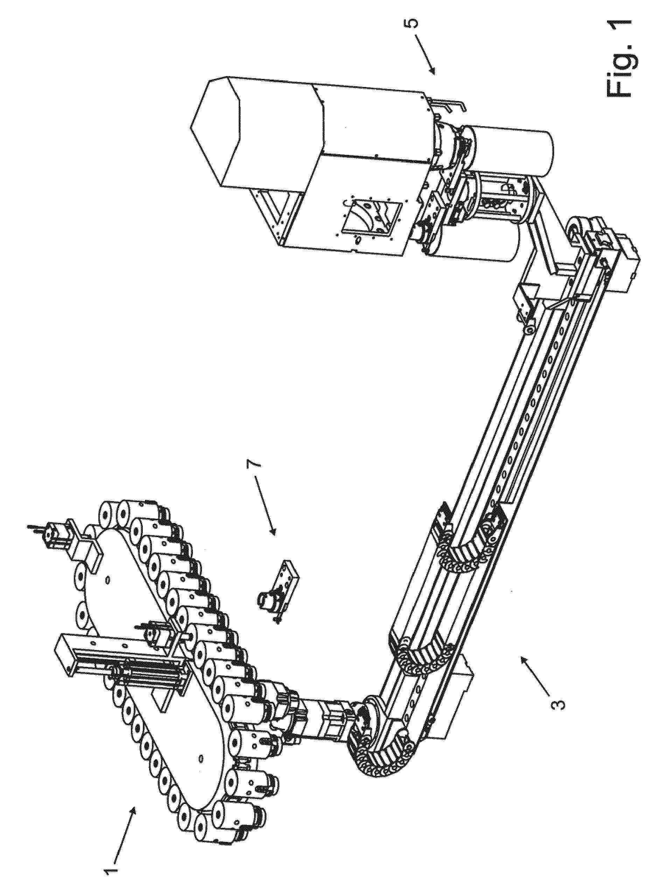

In der Figur 1 sind ein erfindungsgemäßes Magazin 1 für Werkzeuge, ein Werkzeugwechseleinrichtung 3 und eine Spindel 5 eines Bearbeitungssystems in einer Isometrie dargestellt. Die Werkzeugwechseleinrichtung 3 und die Spindel 5 sind nicht Teil der beanspruchten Erfindung, sondern dienen dazu, das Zusammenspiel zwischen Bearbeitungssystem und Werkzeugwechseleinrichtung 3 und dem erfindungsgemäßen Magazin 1 für Werkzeuge zu veranschaulichen.

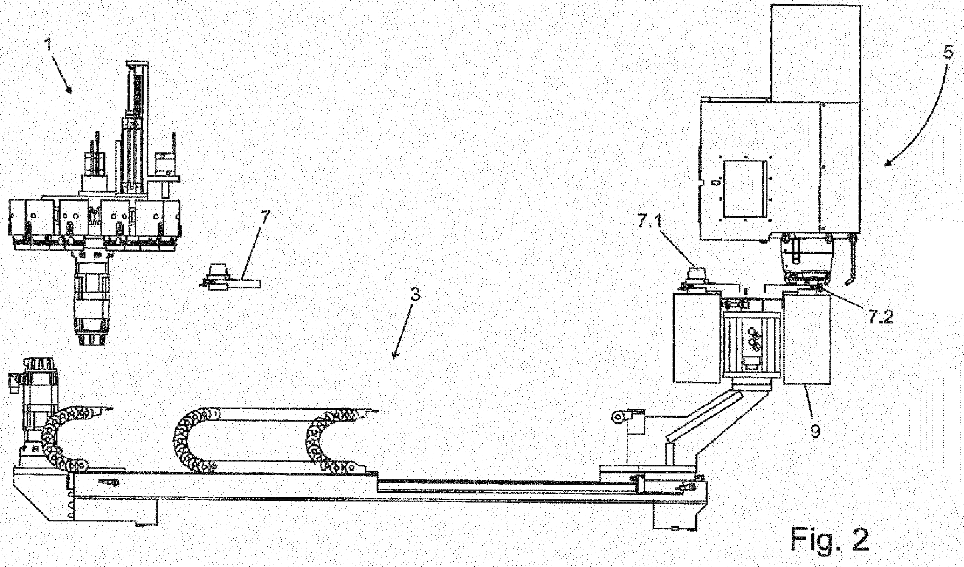

Die Figur 2 zeigt eine Ansicht von der Seite auf das System gemäß der Figur 1. Gleiche Bauteile werden in allen Figuren mit gleichen Bezugszeichen versehen. Wegen der Übersichtlichkeit sind nicht in allen Figuren alle Bezugszeichen eingetragen.

In den Figuren 1 und 2 ist ein Werkzeugwechsler 7, der zu der Werkzeugwechseleinrichtung 3 gehört, in einer "Warteposition" dargestellt. Die dargestellte Warteposition des Werkzeugwechslers 7 dient der Veranschaulichung. In der Realität sind zwei solcher Werkzeugwechsler 7 an einem drehbaren Kopf der Werkzeugwechseleinrichtung 3 angeordnet. Wenn sich dieser Kopf 9 in der Figur 2 von der dargestellten Position am rechten Bildende nach links bewegt, dann erreicht der Werkzeugwechsler 7.1 die Warteposition.

Da die beanspruchte Erfindung im Wesentlichen das Magazin 1 und die Übergabe von Werkzeugen zwischen dem Magazin 1 und dem Werkzeugwechsler 7 betrifft, werden im Folgenden nur das Magazin 1 und der Werkzeugwechsler 7 dargestellt. Der Rest der Werkzeugwechseleinrichtung 3 und die Spindel 5 der Werkzeugmaschine werden aus Gründen der Übersichtlichkeit nicht mehr dargestellt.

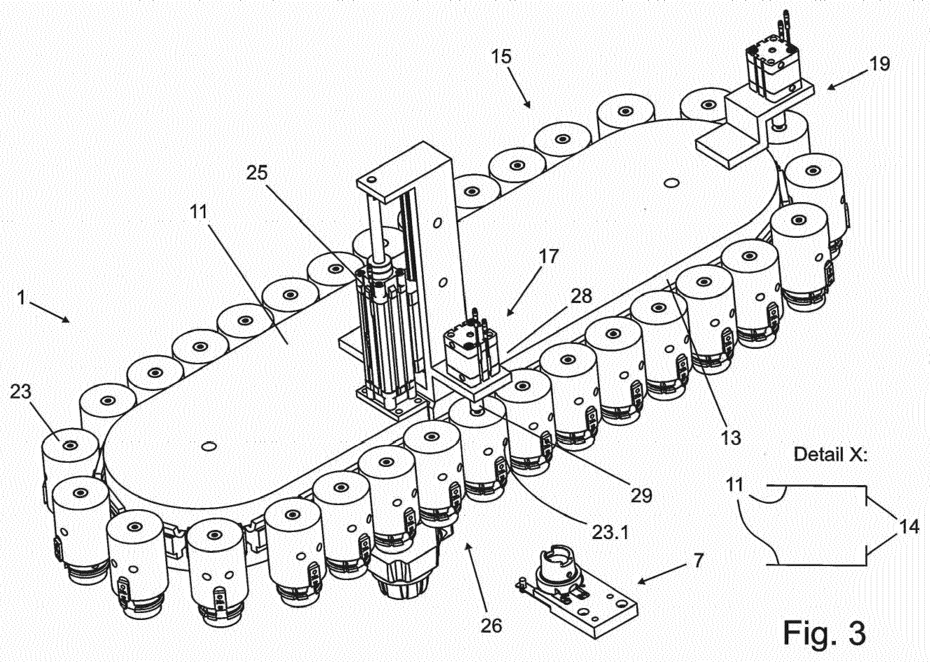

In der Figur 3 sind die einzelnen Baugruppen des erfindungsgemäßen Magazins 1 mit Bezugszeichen versehen. Das Magazin 1 umfasst einen langgestreckten Grundkörper 11, der in der Draufsicht aus einem Rechteck mit zwei angesetzten Halbkreisen zusammengesetzt ist. Am Außenumfang dieses Grundkörpers 11 ist eine Laufbahn 13 angeordnet, die bei dem dargestellten Ausführungsbeispiel aus zwei parallel zueinander verlaufenden Rippen 14 besteht (siehe das Detail X der Figur 3). In dem Detail X sind zwei Schalen oder Hälften des Grundkörpers 11 und die daran abgeordneten Rippen 14 der Laufbahn 13 vereinfacht und im Schnitt dargestellt. Das Zusammenwirken der Laufbahn 13 und den erfindungsgemäßen Köchern 23 wird weiter unten noch näher erläutert.

In der Figur 3 ist eine Übergabeeinrichtung 15 mit einer Entriegelungseinrichtung 17 sowie eine zweite Entriegelungseinrichtung 19 an dem in Figur 3 rechten Ende des Magazins 1 gut zu erkennen.

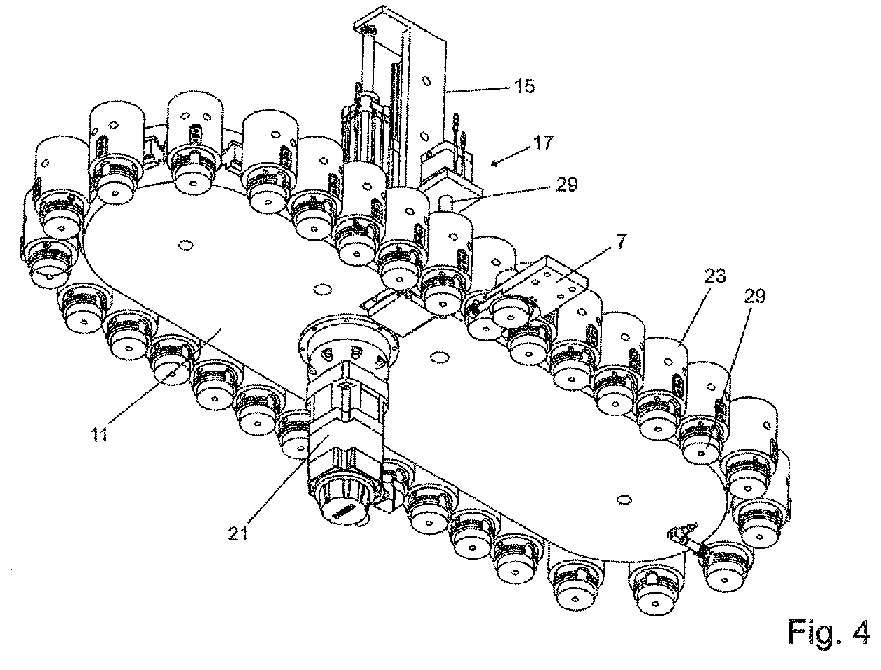

Die Figur 4 zeigt das erfindungsgemäße Magazin 1 in einer Isometrie von unten. In dieser Darstellung ist die untere Schale des Gehäuses 11 und ein daran befestigter (Getriebe-) Motor 21 erkennbar, der zu der Antriebseinrichtung gehört. Aus der Zusammenschau der Figuren 1, 2, 3 und 4 wird deutlich, dass zu dem erfindungsgemäßen Magazin auch eine Vielzahl von Köchern 23 gehört, die mithilfe von Führungselementen, die in diesen Figuren nicht besonders gut sichtbar sind von den Rippen 14 der Laufbahn 13 geführt und gehalten werden.

Die Übergabeeinrichtung 15 umfasst einen Aktuator, bevorzugt einen Linearaktuator 25, der an der Übergabestelle 26 ein Segment der Laufbahn 13 und den in dem Segment befindlichen Köcher 23.1 nach unten aus der Laufbahn 13 und in Richtung des Werkzeugwechslers 7 bewegen kann. an der Übergabestelle 26 verläuft die Bewegungsrichtung der Laufbahn von links nach rechts. Die Bewegungsrichtung des Aktuators 25 verläuft senkrecht dazu, nämlich von oben nach unten. Durch Betätigen des Aktuators 25 kann der Köcher 23.1, der sich in der Übergabestelle 26 befindet, in Richtung des Werkzeugwechslers 7 bewegt werden.

Die Entriegelungseinrichtung 17 ist an dem beweglichen Teil der Übergabeeinrichtung 15 angeordnet und bewegt sich mit diesem mit. Sie umfasst ebenfalls einen Linearaktuator 28und einen von dem Aktuator 28 betätigten Entriegelungsstift 29.

In den Figuren 3 und 4 sind die Köcher 23 jeweils mit Werkzeugen 29 bestückt dargestellt.

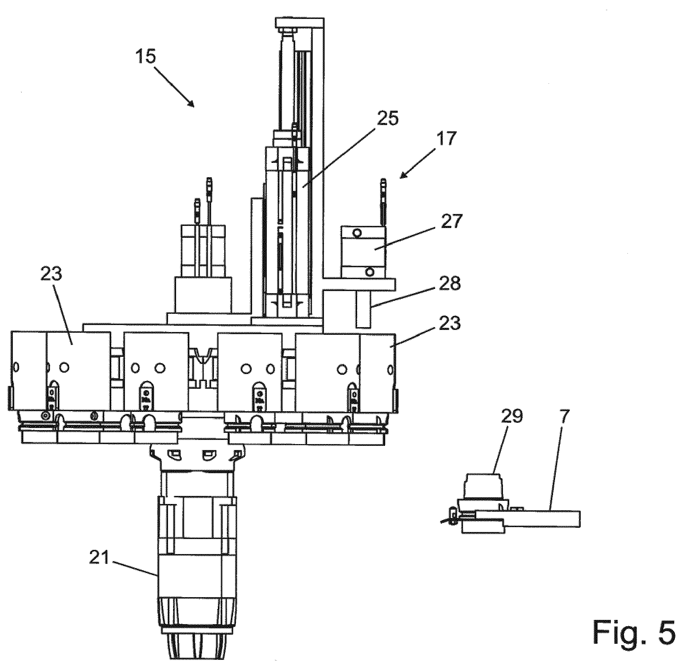

In den nachfolgenden Figuren 5 bis 9 wird die Übergabe eines Werkzeugs, das sich in dem Werkzeugwechsler 7 befindet in einen Köcher 23 des erfindungsgemäßen Magazins 1 in mehreren Schritten dargestellt und erläutert.

In der Figur 5 sind alle Köcher 23 in einer Ebene angeordnet und werden von der Laufbahn 13 (nicht sichtbar) geführt und gehalten.

Etwas seitlich und unterhalb der Köcher 23 ist der Werkzeugwechsler 7 mit einem Werkzeug 29 in der "Warteposition". Diese Warteposition ist dadurch gekennzeichnet, dass sich der Werkzeugwechsler 7 und das Werkzeug 29 in unmittelbarer Nähe des Magazins 1 befinden. Allerdings ist der Abstand so groß, dass eine Kollision eines Werkzeugs in einem der Köcher 23 und des Werkzeugs 29 in dem Werkzeugwechsler 7 ausgeschlossen ist.

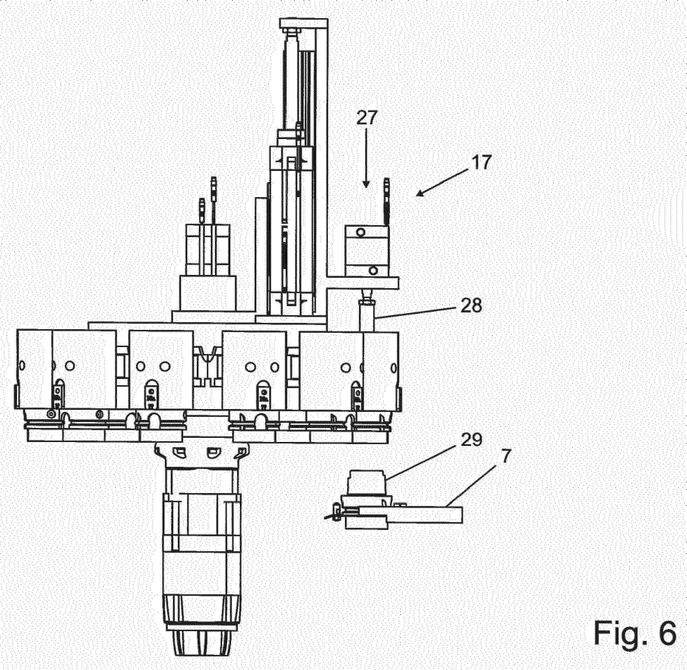

In der Figur 6 sind gegenüber der Figur 5 zwei Veränderungen sichtbar. Erstens ist der Werkzeugwechsler 7 mit dem Werkzeug 29 aus der Warteposition in eine Position direkt unterhalb der Übergabestelle 26 gefahren. Außerdem hat die Entriegelungseinrichtung 17 den Entriegelungsstift 28 in der Figur 6 von oben nach unten in den Köcher 23.1, der sich im Übergabebereich 26 befindet, aber in Figur 6 nicht sichtbar ist , eingefahren und dadurch den Köcher 23.1 entriegelt.

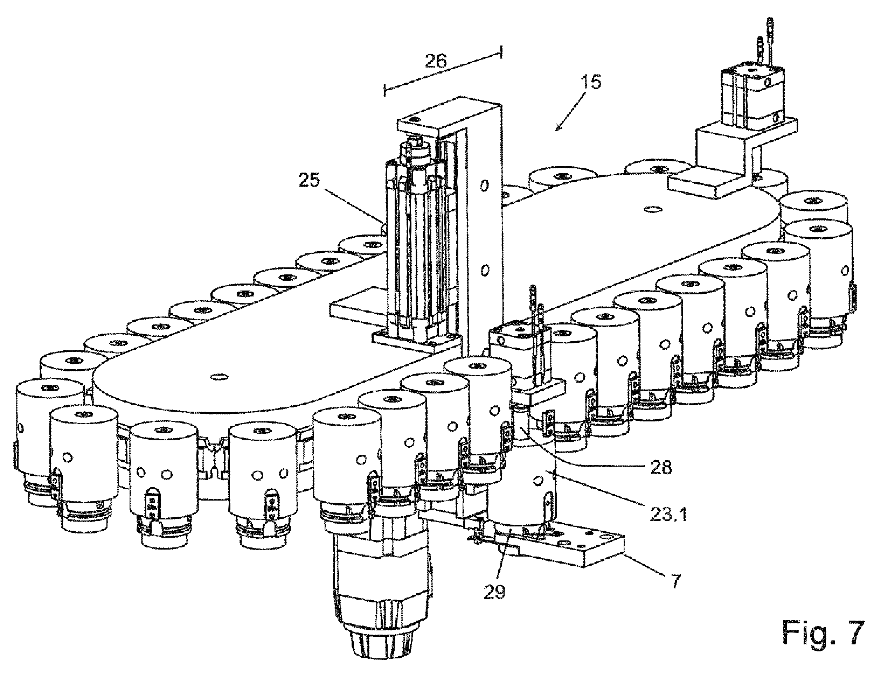

Anschließend wird der Aktuator 25 der Übergabeeinrichtung 15 betätigt, sodass das der Köcher 23.1 und das in der Übergabestelle 26 befindliche Segment 26 der Laufbahn 13 in der Figur 7 nach unten in Richtung des Werkzeugwechslers 7 beziehungsweise des Werkzeugs 29 bewegt werden.

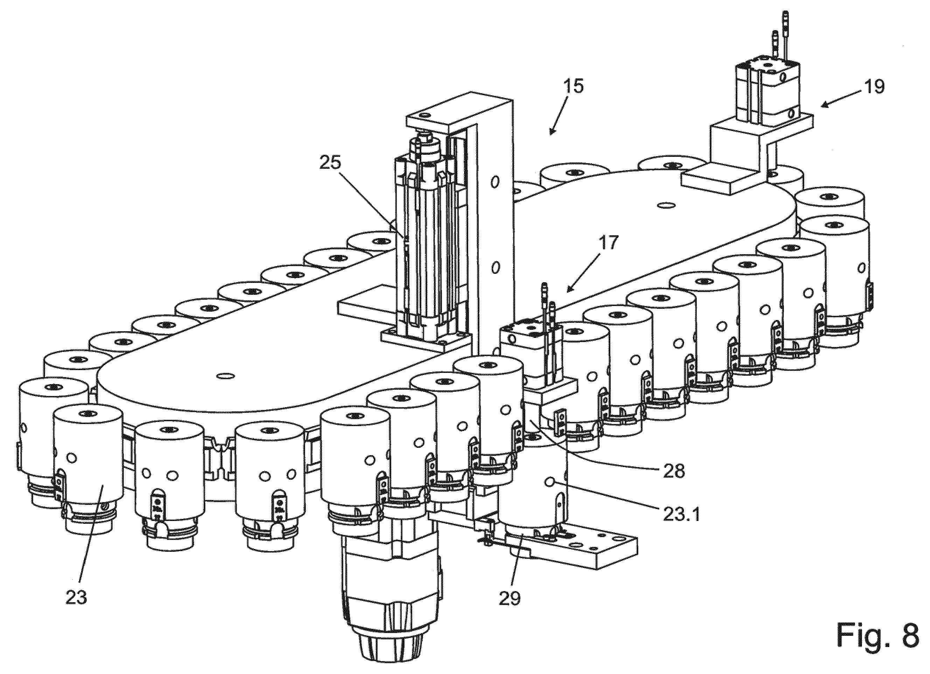

Nun befindet sich der Köcher 23.1 nicht mehr in einer Ebene mit den anderen Köchern 23 des Magazins 1. Durch die Bewegung des Köchers 23.1 auf das Werkzeug 29, welches sich in dem Werkzeugwechsler 7 befindet, stülpt sich der Köcher 23.1 über das Werkzeug 29. Anschließend wird der Entriegelungsstift 28 aus dem Köcher 23.1 herausgefahren, und dadurch das Werkzeug 29 in dem Köcher 23.1 verriegelt. Diese Situation ist in der Figur 8 dargestellt. Sobald der Entriegelungsstift 28 aus dem Köcher 23.1 ausgefahren ist, kann das Werkzeug 29 nicht mehr aus dem Köcher 23.1 herausfallen, weil es in dem Köcher 23.1 gehalten wird.

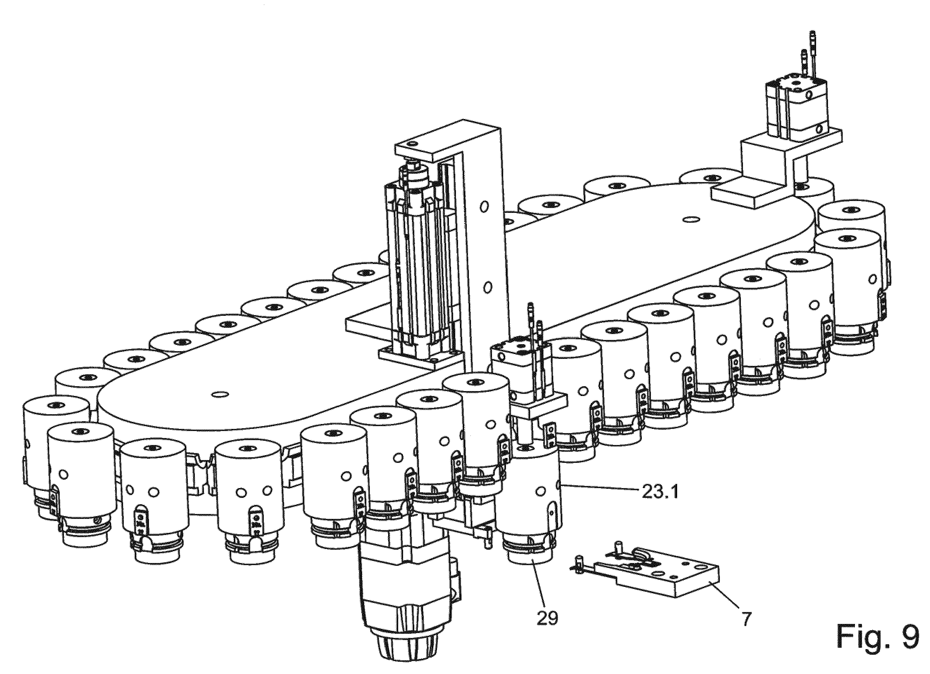

Danach kann der Werkzeugwechsler 7 wieder in die Warteposition gefahren werden (siehe Figur 9).

In einem weiteren Schritt (nicht dargestellt) wird der Köcher 23.1 von der Übergabeeinrichtung 15 wieder nach oben von dem Werkzeugwechsler 7 wegbewegt, bis der Köcher 23.1 die in einer Ebene mit den übrigen Köchern 23 sich befindet. Dies entspricht der in Figur 5 dargestellten Position der Köcher 23. Damit ist das Beladen eines Köchers beziehungsweise die Übergabe eines Werkzeugs vom Werkzeugwechsler 7 an einen Köcher 23.1 abgeschlossen.

Wenn nun durch die Antriebseinrichtung des erfindungsgemäßen Magazins 1 die Köcher 23 in der Laufbahn 13 bewegt werden, gelangt ein anderer Köcher 23 in der Übergabestelle 26 und das in diesem Köcher 23 befindliche Werkzeug kann an den Werkzeugwechsler 7 übergeben werden.

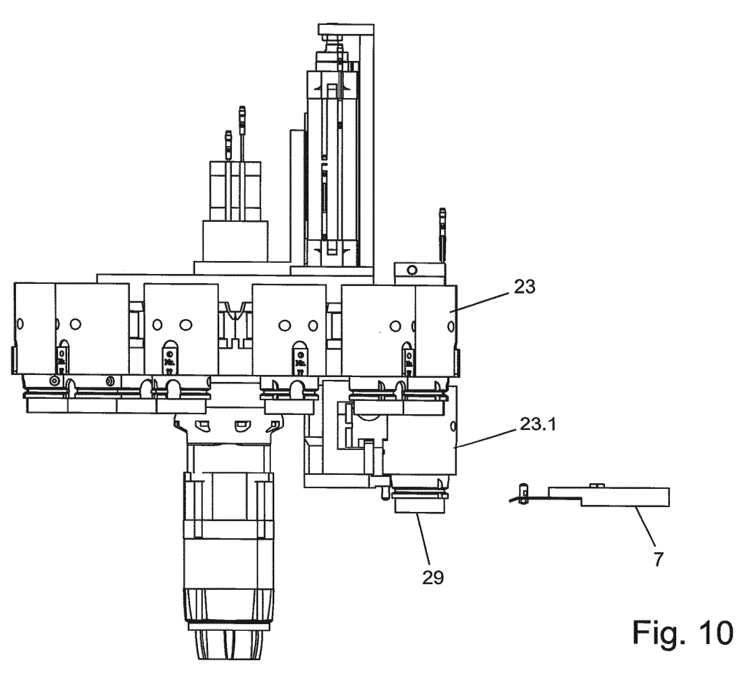

Dieser Vorgang ist in den Figuren 10 bis 14 dargestellt.

In einem ersten Schritt bewegt der Aktuator 25 der Übergabeeinrichtung 15 den mit einem Werkzeug 29 bestückten Köcher 23.1 in Richtung des Werkzeugwechslers 7 (nach unten in Figur 10). Der Entriegelungsstift 28 der Entriegelungseinrichtung 17 ist nicht in dem Köcher 23.1 eingefahren, sodass das Werkzeug 29 nicht aus dem Köcher 23.1 rausfallen kann.

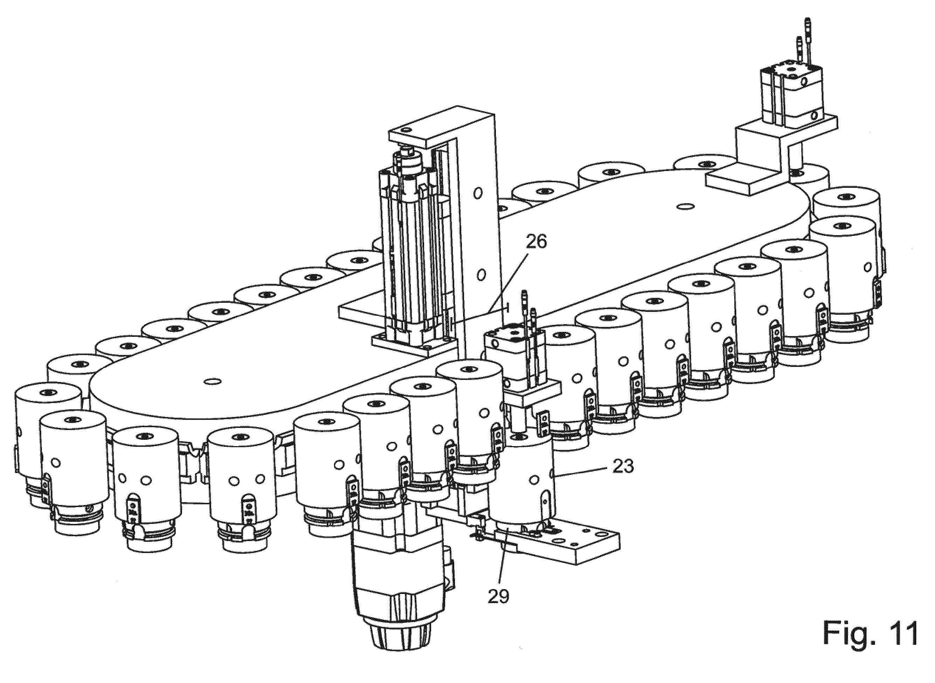

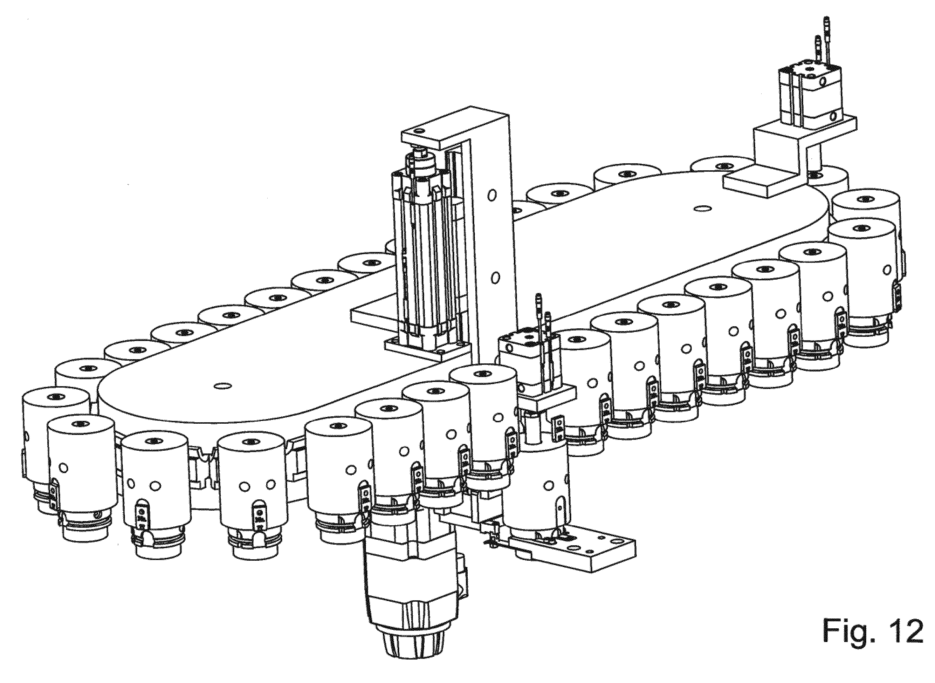

In der Figur 11 ist die gleiche Situation in einer Ansicht von vorne dargestellt. In einem darauffolgenden Schritt fährt der Werkzeugwechsler von der Warteposition in Richtung des Magazins des Köchers 23.1 und nimmt dabei das Werkzeug 29 auf. Sobald der Werkzeugwechsler 7 das Werkzeug 29 aufgenommen hat und das Werkzeug 29 somit gegen Herunterfallen gesichert ist, wird die Entriegelungseinrichtung 17 betätigt und der Entriegelungsstift 28 fährt in den Köcher 23.1 ein. Dadurch wird die Verriegelung zwischen Köcher 23.1 und Werkzeug 29 geöffnet. Diese Situation ist in Figur 12 dargestellt.

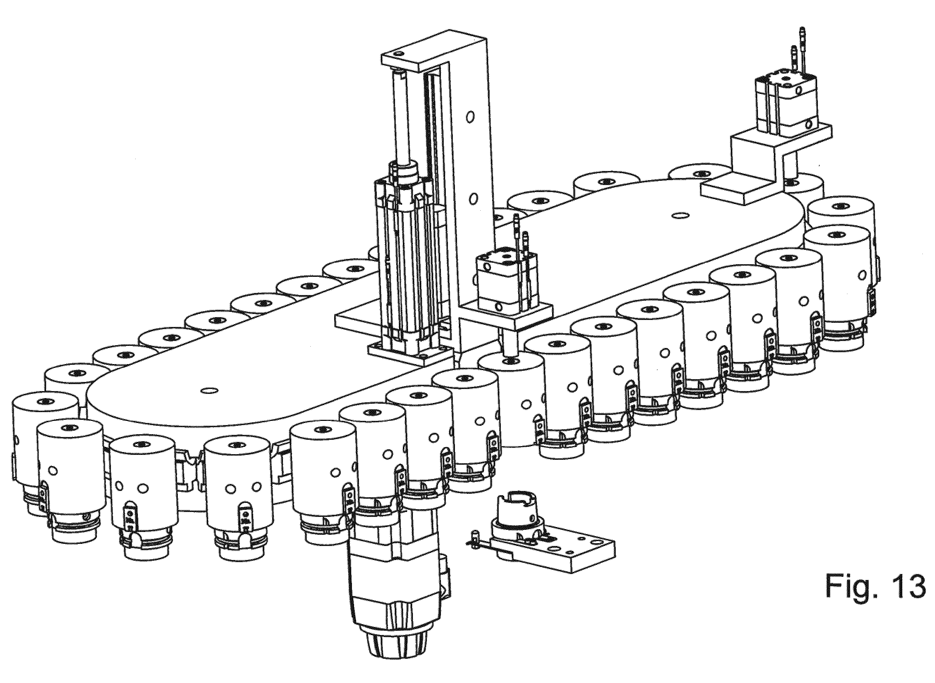

In einem weiteren Schritt, der in Figur 13 dargestellt ist, wird der leere Köcher 23.1 von der Übergabeeinrichtung 15 wieder vom Werkzeugwechsler 7 weg nach oben bewegt, bis sich der Köcher 23.1 wieder auf gleicher Höhe bzw. in einer Ebene mit den anderen Köchern 23 befindet.

Der Werkzeugwechsler 7 kann das Werkzeug 29 der Spindel 5 zuführen (siehe Figuren 1 und 2).

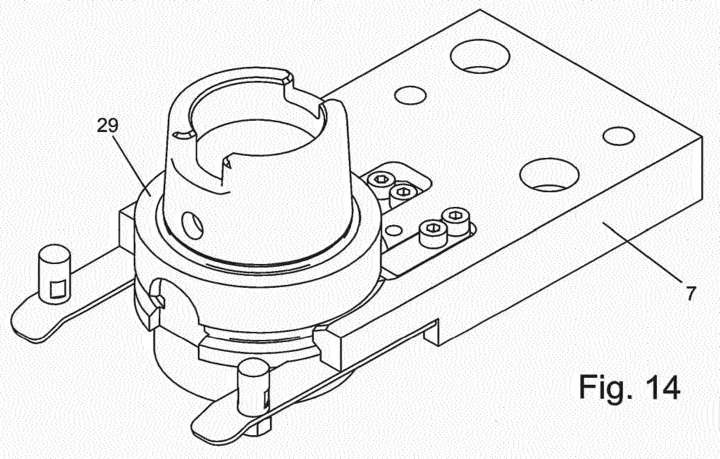

In der Figur 14 sind ein Werkzeugwechsler 7 und ein Werkzeug 29 in einer Isometrie dargestellt. Der Werkzeugwechsler 7 und das Werkzeug 29 gehören zur Peripherie des erfindungsgemäßen Magazins. Es soll anhand dieser Isometrie deutlich werden, dass der Werkzeugwechsler 7 ein relativ einfach ausgeführtes Bauteil ist, das ein Werkzeug 29 aufnehmen kann, indem es orthogonal zur Längsachse des Werkzeugs 29 in die Nuten des Werkzeugs 29 einfährt und es dadurch hält.

Das Werkzeug wird gegen Herausfallen mittels einer den Werkzeugbund umfassenden Blattfeder gesichert. Diese Blattfeder wird durch die Bewegungen der anderen am Wechselvorgang beteiligten Elemente über geeignete Nocken automatisch zum richtigen Zeitpunkt geöffnet und geschlossen, so dass hierfür keine zusätzliche aktive Funktionalität im Werkzeugwechsler 7 liegen muss. Der Werkzeugwechsel in der Spindel funktioniert genauso wie auf der Magazinseite.

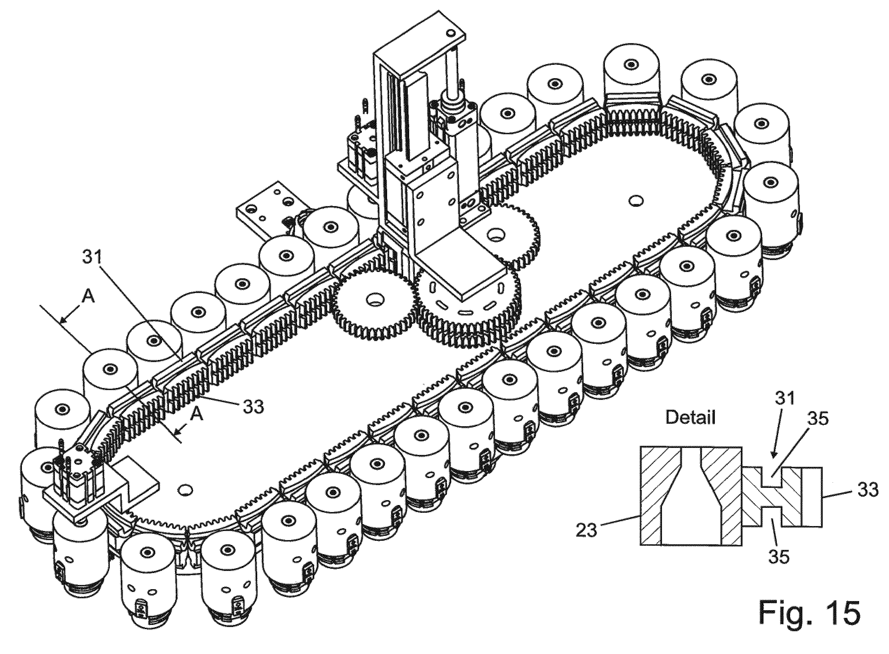

Die Figuren 15 bis 19 veranschaulichen den Antrieb des erfindungsgemäßen Magazins 1; die obere Hälfte des Gehäuses 11 ist nicht dargestellt. Aus der Isometrie gemäß Figur 15 ist gut zu erkennen, dass jeder Köcher 23 mit einem Führungselement 31 und einem Antriebselement 33 in Form einer Zahnstange verbunden ist.

In dem Detail X der Figur 15 ist ein Schnitt entlang der Linie A-A durch einen Köcher 23, ein Führungselement 31 und ein Antriebselement 3 dargestellt. Aus diesen Detail lässt sich gut erkennen, dass erstens, das Führungselement 31 zwei Nuten 35 umfasst, die so gestaltet und dimensioniert ist, dass die Rippen 14 der Laufbahn 13 in die Nuten 35 des Führungselements 31 eintaucht und dadurch das Führungselement 31 formschlüssig führt.

In dem Detail der Figur 15 ist auf der rechten Seite des Führungselements 31 das als Zahnstange ausgebildete Antriebselement 33 dargestellt. Diese Verzahnung beziehungsweise erstreckt sich über die ganze Höhe des Führungselements 31. Die Verzahnung kann in der Mitte unterbrochen sein (nicht dargestellt).

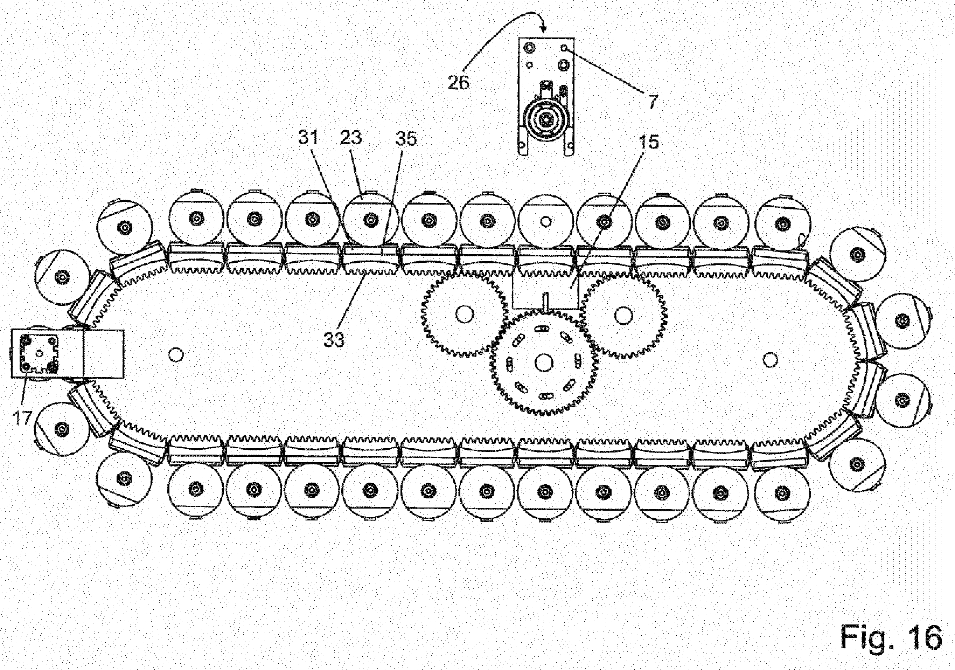

In der Figur 16 ist ein Blick von oben auf die freigestellte Antriebseinrichtung des erfindungsgemäßen Magazins 1 dargestellt. In dieser Ansicht wird besonders gut deutlich, dass die Nuten 35 eine ebene und eine gekrümmte Wand haben. Die äußere Wand der Nut 35 ist eben, bzw. gerade und die innere Wand der Nut 35 ist kreisbogenförmig gekrümmt. Dabei entspricht die Krümmung dieses Kreisbogens dem Krümmungsradius, den die Laufbahn 13 an den Enden des Magazins aufweist. Die Dicke beziehungsweise der Breite der Nut 35 an der engsten Stelle entspricht der Dicke der Rippen 14 der Laufbahn 13.

In den geraden Bereichen der Laufbahn liegt die gerade Wand der Nut 35 über die gesamte Länge des Führungselements 31 an der Rippe 14 der Laufbahn an. Die gekrümmte Wand der Nut 35 berührt nur in der Mitte des Führungselements 31 die Rippe 14 der Laufbahn 13.

Dort wo die Laufbahn 13 kreisbogenförmig gekrümmt ist, liegt das Führungselement 31 mit der gekrümmten inneren Wand der Nut 35 über die gesamte Länge des Führungselements 31 an der Rippe 14 an. Die äußere gerade Wand der Nut 35 berührt die Schiene 14 der Laufbahn 13 nur in der Mitte.

Durch die erfindungsgemäße Ausgestaltung der Nuten 35 ist immer gewährleistet, dass die Führungselemente 31 über die gesamte Länge mit einer Wand an den Rippen 14 der Laufbahn 13 anliegen.

In der Übergabestelle 26, das heißt, dort wo die Übergabeeinrichtung 15 angeordnet ist, befindet sich ein Segment der Laufbahn 13, das mit der Übergabeeinrichtung 15 verbunden ist, und daher in der Zeichnungsebene der Figur 16 nach unten in Richtung des Werkzeugwechslers 7 bewegt werden kann. Dieses Segment der Laufbahn 13 besteht aus zwei kurzen Abschnitten der Rippen 14, die mit der Übergabeeinrichtung 15 verbunden sind.

In den Figuren 15 und 16 wird auch deutlich, dass die Berührstellen und dass die Führungselemente 31 an ihren Enden, dort wo sie an die benachbarten Führungselementen 31 anstoßen, gekrümmt sind. Die Krümmung an den Stirnseiten ist so gewählt, dass es nicht zu Verspannungen kommt, wenn die Führungselemente sich auf dem kreisbogenförmigen Abschnitt der Laufbahn 13 bewegen. Außerdem soll das Spiel in der Bewegungsrichtung der Laufbahn immer möglichst klein und möglichst konstant bleiben. Bei dem dargestellten Ausführungsbeispiel sind die Stirnseiten kreisbogenförmig gekrümmt.

Es hat sich als vorteilhaft erwiesen, wenn sich eine ungerade Zahl von Köchern 23 und damit auch von Führungselementen 31 in einer Laufbahn 13 befindet. Damit werden Verspannungen zwischen den Führungselementen 31 verhindert. Durch die ungerade Zahl der Köcher gleichen sich die Kürzungen und Längungen des Abstandes durch den Polygoneffekt in der Kurve zwischen linkem und rechtem Kreisbogen nahezu aus. Das lässt ein relativ schmales platzsparendes Werkzeugmagazin mit entsprechend wenigen Werkzeugen in der Kurve zu.

Aus der Figur 16 ist gut zu erkennen, dass an dem linken Ende die zweite Entriegelungseinrichtung 19 angeordnet ist. Dort ist es möglich einen Köcher 23.2 zu entriegeln und manuell dort ein Werkzeug einzusetzen beziehungsweise ein Werkzeug zu entnehmen.

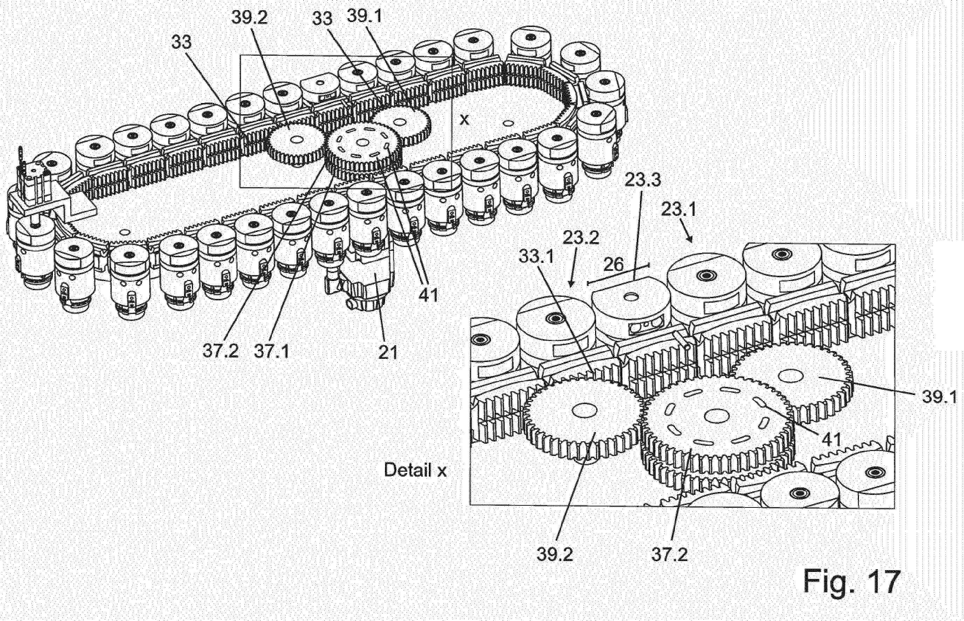

In der Figur 17 ist zu erkennen, dass der Getriebe- oder Antriebsmotor 21 zwei koaxial zueinander angeordnete Zahnräder 37.1 und 37.2 antreibt. Die beiden Zahnräder 37.1 und 37.2 haben die gleiche Zähnezahl. Das Zahnrad 37.1 treibt ein Ritzel 39.1 an, während das Zahnrad 37.2 ein Ritzel 39.2 antreibt. Dies bedeutet auch, dass die Ritzel 39.1 und 39.2 nicht in einer Ebene, sondern axial versetzt zueinander angeordnet sind. Dies lässt sich in der Figur 17 gut erkennen. Dort kämmt nämlich das Ritzel 39.2 mit dem oberen Teil des Antriebselements 33 (Zahnstangensegment), während das Ritzel 39.1 mit dem unteren Teil des Antriebselements 39 kämmt. In der Figur 17 sind an dem Zahnrad 37.2 mehrere konzentrisch zur Drehachse des Antriebsmotors 21 angeordnete Langlöcher 41 dargestellt.

Bei dem dargestellten Ausführungsbeispiel ist nur das Zahnrad 37.1 drehfest mit der Abtriebswelle des Antriebsmotors 21 verbunden. Das zweite Zahnrad 37.2 wird vom ersten Zahnrad 37.1 angetrieben. Dabei erfolgt die Drehmomentübertragung vom Zahnrad 37.1 zum Zahnrad 37.2 kraftschlüssig, indem durch die Langlöcher 41 des Zahnrads 37.2 Schrauben (nicht dargestellt) gesteckt werden, die mit Gewindebohrungen (nicht dargestellt) im Zahnrad 37.1 zusammenwirken. Dadurch werden die beiden Zahnräder 37.1 und 37.2 miteinander in axialer Richtung verspannt und das erforderliche Drehmoment kann vom Zahnrad 37.1 auf das Zahnrad 37.2 übertragen werden. Wenn man die nicht dargestellten Schrauben löst, ist es möglich, das Zahnrad 37.2 relativ zum Zahnrad 37.1 etwas zu verdrehen. Infolgedessen wird auf das Ritzel 39.2 etwas verdreht. Dies hat zur Folge, dass sich das Führungselement 33.2 des Köchers 23.2, das mit dem Ritzel 39.2 kämmt, relativ zu dem Führungselement 33.1 des Köchers 23.1 bewegt. Dadurch kann das zwischen den Köchern 23.1 und 23.2 in der Übergabestelle 27 befindliche Köcher 23.3 sehr exakt und spielarm positioniert werden.

Es ist vorteilhaft, wenn der als Getriebemotor ausgebildete Antriebsmotor 21 eine Untersetzung hat, die der Zähnezahl des Zahnrads 37 entspricht. Wenn zum Beispiel der Getriebemotor eine Untersetzung von 50:1 hat und dass Zahnrad eine Zähnezahl von 50 hat, dann taktet eine Umdrehung des Antriebsmotors 21 das Magazins exakt um einen Zahn weiter. Ein Magazinumlauf kann dann exakt und sehr einfach gemäß folgender Formel ermittelt werden, selbst wenn ein Absolutgeber auf dem Antriebsmotor 21 nur die Zahl der Umdrehungen des Antriebsmotors erfasst:

Antriebsmotors erfasst:


Ein Magazinumlauf = Zahl der Magazinplätze x Zahl der Zähne je

Antriebselement x Untersetzungsverhältnis des Antriebsmotors.

Hierdurch ergibt sich eine eindeutige Zuordnung der Positionen aller Köcher des Magazins in Abhängigkeit der vom Absolutgeber auf der Motorachse ausgegebenen Signale ohne Restwertverrechnung oder Modulo-Funktion. Trotzdem ist der maximale Positionierfehler nie größer als die Fertigungstoleranzen der drei am Positioniervorgang beteiligten Antriebselemente.

Diese Einstellung beziehungsweise Positionierung des Köchers 23.3 in der Übergabestelle 24 findet üblicherweise vor der Inbetriebnahme des erfindungsgemäßen Magazins 1 statt. Danach ist es nicht mehr erforderlich.

Weil alle Köcher 23 des erfindungsgemäßen Magazin ohne großes Spiel in Bewegungsrichtung hintereinander auf den Rippen 14 der Laufbahn 13 geführt sind, ist es möglich mit der erfindungsgemäßen Antriebseinrichtung alle Köcher 23 gleichzeitig zu bewegen. Besonders vorteilhaft ist es, dass der Köcher 23.3, der sich zwischen den angetriebenen Köchern 23.1 und 23.2 befindet, sehr exakt in der Übergabestelle 27 positioniert werden kann. Dies geschieht ohne dass die Führungselemente 31 der Köcher 23 miteinander verbunden wären, lediglich durch das Übertragen der zum Antrieb erforderlichen Kräfte über die Stirnseiten der Führungselemente 31.

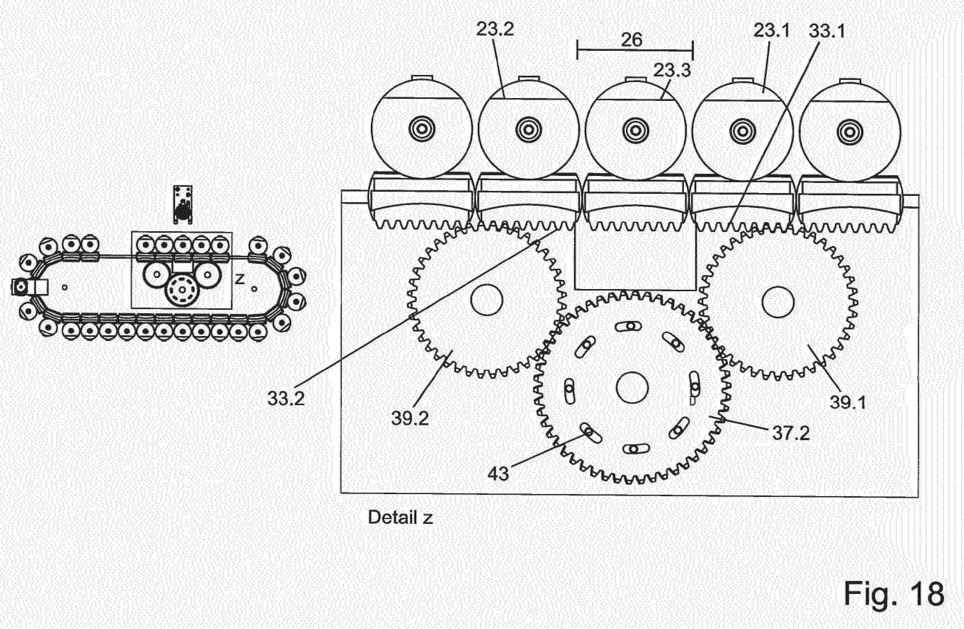

In der Figur 18 ist ein Ausschnitt aus einer im erfindungsgemäßen Magazin dargestellt, der die Übergabestelle 27 dargestellt. Dabei wird deutlich, dass die Achsabstände der Ritzel 39.1 und 39.2 so gewählt sind, dass die Zähne des Ritzel 39.1 und die Zähne des Ritzels 39.2 um eine halbe Zahnteilung versetzt zueinander angeordnet sind. Dadurch ist sichergestellt, dass auf jeden Fall eines der Ritzel 39 mit einem Antriebselement 33 eines Köchers 23 kämmt und dieses antreiben kann, selbst wenn das andere Ritzel gerade in eine Lücke zwischen zwei benachbarten Antriebselementen 33 eintaucht.

In dem Detail in der Figur 18 sind auch die Schrauben 43, die zum Verspannen der Zahnräder 37.1 und 37.2 benötigt werden, dargestellt. Wichtig ist auch zu erkennen, dass der Köcher 23.3 und das zugehörige Antriebselement 33.3 sich nicht im Eingriff mit einem der Ritzel 39 befinden und mit Hilfe der Übergabeeinrichtung 15 senkrecht aus der Zeichnungsebene nach unten herausgefahren werden kann, wie dies im Zusammenhang mit den Figuren 5 bis 13 beschrieben wurde.


**Patentansprüche**

1. Magazin für Werkzeuge umfassend eine in sich geschlossene Laufbahn (13), mehrere Köcher (23) für Werkzeuge, eine Übergabeeinrichtung (15) und eine Antriebseinrichtung für die Köcher (23), wobei die Köcher (23) entlang der Laufbahn (15) geführt werden und wobei die Übergabeeinrichtung (15) so ausgebildet ist, dass sie an einer Übergabestelle (26) einen der Köcher (23) aus der Laufbahn (13) auskoppeln kann, , **dadurch gekennzeichnet, dass** jeder Köcher (23) ein Führungselement (31) und ein Antriebselement (33) aufweist, und dass die Antriebseinrichtung formschlüssig mit den Antriebselementen (33) von zwei Köchern (23.1, 23.2), die sich beidseits der Übergabeeinrichtung (15) befinden, in Eingriff ist.

2. Magazin nach Anspruch 1, **dadurch gekennzeichnet, dass** die Antriebselemente (33) der Köcher (23) als Zahnstangensegment ausgebildet sind.

3. Magazin nach einem der Ansprüche 2 oder 3, **dadurch gekennzeichnet, dass** die Führungselemente (31) formschlüssig in der Laufbahn (13) aufgenommen sind.

4. Magazin nach einem der vorhergehenden Ansprüche, **dadurch gekennzeichnet, dass** die Übergabeeinrichtung (15) einen Aktuator, bevorzugt einen Linear-Aktuator (25) umfasst, und dass eine Bewegungsrichtung des Aktuators (25) und eine Bewegungsrichtung der Laufbahn (13) an der Übergabestelle (26) einen Winkel größer 30°, bevorzugt einen Winkel größer 60° und besonders bevorzugt einen Winkel von 90° einschließen.

5. Magazin nach einem der vorhergehenden Ansprüche, **dadurch gekennzeichnet, dass** die Übergabeeinrichtung (15) mit einem Werkzeugwechsler (7) zusammenwirkt.

**6.** Magazin nach einem der vorhergehenden Ansprüche, **dadurch gekennzeichnet, dass** an der Übergabestelle (26) ein Segment der Laufbahn (13) mit dem Aktuator (25) der Übergabeeinrichtung (15) verbunden ist.

**7.** Magazin nach einem der vorhergehenden Ansprüche, **dadurch gekennzeichnet, dass** die Übergabeeinrichtung (15) eine Entriegelungseinrichtung (17) umfasst.

**8.** Magazin nach Anspruch 7, **dadurch gekennzeichnet, dass** die Entriegelungseinrichtung (17) einen Aktuator, bevorzugt einen Linear-Aktuator (27) und ein von dem Aktuator (27) betätigtes Entriegelungselement (28) umfasst.

**9.** Magazin nach einem der vorhergehenden Ansprüche, **dadurch gekennzeichnet, dass** die Antriebseinrichtung einen Motor (21) mindestens ein Zahnrad (37) und zwei Ritzel (39.1, 39.2) umfasst.

**10.** Magazin nach Anspruch 9, **dadurch gekennzeichnet, dass** die Antriebseinrichtung zwei koaxial zueinander angeordnete und von dem Motor (21) angetriebene Zahnräder (37.1, 37.2) und zwei Ritzel (39.1, 39.2) umfasst, dass die Zahnräder () starr miteinander gekoppelt sind, wobei ein erstes Ritzel (39.1) mit einem ersten Zahnrad (37.1) und mit einem Antriebselement (33.1) eines auf einer ersten Seite der Übergabeeinrichtung (15) befindlichen Köchers (23) in Eingriff ist, und dass ein zweites Ritzel (39.2) mit einem zweiten Zahnrad (37.2) und mit einem Antriebselement (33.2) eines auf einer zweiten Seite der Übergabeeinrichtung (15) befindlichen Köchers (23) in Eingriff ist.

**11.** Magazin nach Anspruch 10, **dadurch gekennzeichnet, dass** die mit den Antriebselementen (33.1, 33.2) kämmenden Zähne der Ritzel (39.1, 39.2) um eine halbe Teilung (p) versetzt sind.

**12.** Magazin nach einem der vorhergehenden Ansprüche, **dadurch gekennzeichnet, dass** die Köcher (23) zur Aufnahme von Werkzeugen mit Steilkegel, HSK-Aufnahme, Capto-Aufnahmen oder Aufnahmen nach VDI-3425 geeignet sind.

Fig. 1

Fig. 2

Fig. 3

Fig. 4

Fig. 5

Fig. 6

Fig. 7

EP 3 093 104 A2

Fig. 8

Fig. 9

Fig. 10

Fig. 11

23

26

29

Fig. 12

Fig. 13

Fig. 14

Fig. 15

Fig. 16

Fig. 17

Fig. 18

Detail z

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2143383

- DE 19609145 A1